Europäisches Patentamt

European Patent Office

Office européen des brevets

(19)

(11) Veröffentlichungsnummer : **0 310 809 B1**

# EUROPÄISCHE PATENTSCHRIFT

(12)

(45) Veröffentlichungstag der Patentschrift :
21.08.91 Patentblatt 91/34

(51) Int. Cl.⁵ : **C21D 1/46, C23C 8/40**

(21) Anmeldenummer : 88114087.5

(22) Anmeldetag : 30.08.88

(54) Vorrichtung zur kontinuierlichen Entschlammung von Salzbädern.

(30) Priorität : 06.10.87 DE 3733721

(43) Veröffentlichungstag der Anmeldung :
12.04.89 Patentblatt 89/15

(45) Bekanntmachung des Hinweises auf die
Patenterteilung :
21.08.91 Patentblatt 91/34

(84) Benannte Vertragsstaaten :
AT BE CH DE ES FR GB GR IT LI LU NL SE

(56) Entgegenhaltungen :
CH-A- 374 378
DE-A- 2 618 598
DE-A- 2 923 028

(56) Entgegenhaltungen :
DE-B- 1 247 361
GB-A- 2 046 611
IRON AND STEEL ENGINEER, Band 54, Nr. 4,
April 1977, Seiten 133,137; "Salt bath filter"

(73) Patentinhaber : Degussa Aktiengesellschaft
Weissfrauenstrasse 9
W-6000 Frankfurt am Main 1 (DE)

(72) Erfinder : Preisser, Friedrich, Dr. Dipl.-Phys.
Am Hellerberg 4
W-6470 Büdingen (DE)
Erfinder : Ruppel, Josef, Dipl.-Ing.
Lindenstrasse 11
W-6453 Seligenstadt (DE)
Erfinder : Wahl, Georg, Dipl.-Ing.
Weidertweg 15
W-6458 Rodenbach (DE)

## Beschreibung

Gegenstand der Erfindung ist eine Vorrichtung zur kontinuierlichen Entschlammung von Salzbädern, bestehend aus einer Filtereinheit mit Gehäuse, einer Pumpe und einem Steigrohr.

Salzbäder werden in großen Umfang beispielsweise zum Härten öder zum Nitrieren von metallischen Werkstoffen, insbesondere von Eisenwerkstoffen, verwendet. Derartige Salzbäder bestehen überwiegend aus Karbonaten und Cyanaten der Alkalimetalle, teilweise sind auch Alkalicyanide enthalten. Solche Salzschmelzen werden normalerweise bei einer Betriebstemperatur von 560 bis 600°C betrieben.

Während der Behandlung von Bauteilen aus Eisenwerkstoffen verschlammen diese Bäder in unterschiedlich hohem Maße, und zwar dadurch, daß anhaftende Stahlpartikel, wie z.B. Drehspäne oder Schleifstaub, sich auf dem Boden des Behandlungsgefässes ansammeln oder in feinverteilter Form im Schwebezustand verbleiben. Desgleichen führt die Behandlung von verzunderten oder von unbearbeitenten Oberflächen (Guß- oder Schmiedehaut) zur Verunreinigung des Bades. Schließlich wird Schlammanteil auch dadurch gebildet, daß von Chargierhilfsmitteln, wie Körben oder Gestellen, nach mehrfacher Behandlung Nitridpartikel abblättern und im Bad verbleiben. Der so entstehende "Schlamm" besteht überwiegend aus Eisennitrid und -oxid.

Andere Salzbäder, wie z.B. Abkühlbäder auf Hydroxidbasis, werden durch die Bildung von unlöslichen Karbonaten immer dickflüssiger, wodurch der Schmelzpunkt der Bäder steigt und die Abkühlwirkung sich vermindert. Daher müssen auch solche Salzbäder gereinigt werden.

Da der Schlammgehalt des Nitrierbades die Reproduzierbarkeit der zu erzielenden Nitrierergebnisse stark beeinflußt, ist eine laufende Säuberung des Bades sehr wichtig. In der Praxis werden dazu verschiedene Entschlammungsvorrichtungen benutzt. Allen bisherigen Systemen ist dabei gemeinsam, daß zur Entschlammung eine Betriebsunterbrechung erforderlich ist, d.h. die Entschlammung muß im unbeschickten Bad vorgenommen werden.

Aus der DE-OS 2911222 ist eine Vorrichtung zur kontinuierlichen Entschlammung von Salzbädern bekannt, die aus einer Filtereinheit, einer in das Salzbad eintauchenden Pumpe und einem Steigrohr besteht. Die Filtereinheit ist hierbei außerhalb des Salzbades angeordnet. Das hat den Nachteil, daß die Filtereinheit und das Steigrohr "einfrieren" können, d.h. die flüssige Salzschmelze verfestigt sich beim Abkühlen in der Filtereinheit und im Steigrohr und setzen die Entschlammungsvorrichtung außer Betrieb. Das Reinigen dieser "eingefrorenen Teile" ist sehr umständlich und führt normalerweise zu einer längeren Unterbrechung des Arbeitsablaufes im Salzbad.

Es war daher Aufgabe der vorliegenden Erfindung, eine Vorrichtung zur kontinuierlichen Entschlammung von Salzbädern zu entwickeln, bestehend aus einer Filtereinheit mit Gehäuse, einer Pumpe und einem Steigrohr, bei der ein "Einfrieren" des Salzes in der Filtereinheit weitestgehend verhindert wird und die gegebenenfalls leicht zu reinigen ist

Diese Aufgabe wird erfindungsgemäß dadurch gelöst, daß die Filtereinheit mit dem Filter ganz oder teilweise in das Salzbad eintaucht, daß das Filter über das obere Ende des Steigrohres gestülpt ist, und daß das Steigrohr im oberen, in das Salzbad eintauchenden Bereich mehrere Bohrungen aufweist, deren Durchmesser das 0,02- bis 0,2-fache des Steigrohrdurchmessers beträgt.

Zur Reinigung der Filtereinheit ist es vorteilhaft, wenn im Gehäuse der Filtereinheit, in der Achse des Steigrohrs, eine verschließbare Öffnung zur Durchführung eines Reinigungselements angebracht ist.

Durch die Anordnung der Filtereinheit zumindest teilweise innerhalb des flüssigen Salzbades wird ein Einfrieren des Filters und des Steigrohres weitestgehend vermieden, da das heiße Salzbad die Heizungsfunktion des Filters übernimmt. Die Pumpe wird dabei so betrieben, daß das Gesamtvolumen des Salzbades in einer Zeitspanne von 1 bis 5 Stunden einmal über das Filter geleitet wird. Das Filter kann bei Bedarf leicht ausgewechselt werden. Sollte das Steigrohr dennoch einmal "einfrieren", kann der Salzpropfen mittels einer in das Steigrohr einführbaren Spitze leicht zerschlagen bzw. entfernt werden. Damit sich keine größere Luftblase unter dem Salzpropfen halten und sich kein Druck im Steigrohr aufbauen kann, ist dieses im oberen Bereich mit Bohrungen versehen, deren Durchmesser das 0,02- bis 0,2-fache, vorzugsweise das 0,05- bis 0,1-fache des Steigrohrdurchmessers beträgt. Der Wirkungsgrad der Pumpe wird durch diese Bohrungen kaum beeinflußt.

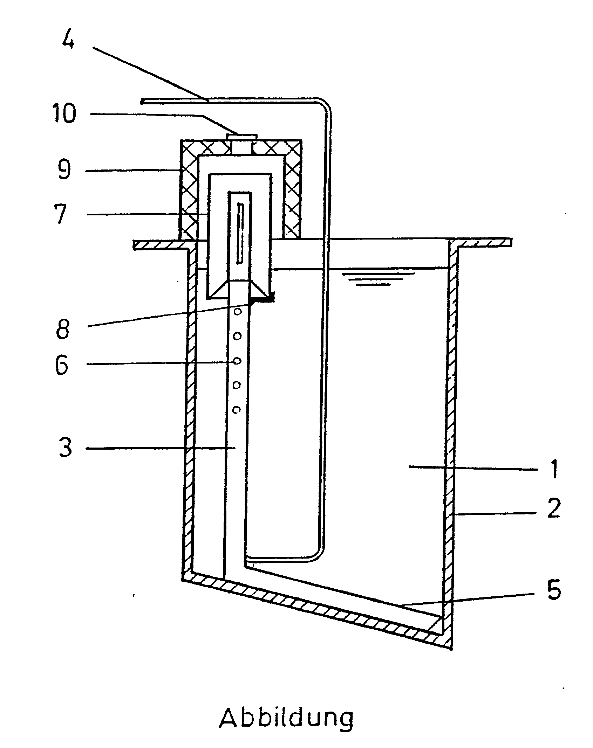

In der Abbildung wird schematisch eine beispielhafte Ausführungsform der Entschlammungsvorrichtung im Längsschnitt gezeigt.

Die Salzschmelze (1), die sich in einer Wanne (2) mit schrägem Boden befindet, wird kontinuierlich über ein Steigrohr (3) in die Filtereinheit gefördert, wo ein filter (7) über das obere Ende des Steigrohrs (3) gestülpt ist.

Der Transport der Salzschmelze (1) erfolgt mittels in der Salzschmelze aufsteigender Luftblasen. Die Luftzufuhr erfolgt über die Druckluftleitung (4), wobei ein Ansaugstutzen (5) den Schlamm von der tiefsten Stelle der Wanne (2) ansaugt. Das Filter wird von einem Anschlag (8) gehalten und ist leicht austauschbar. Unterhalb des Salzbadspiegels ist das Steigrohr (3) mit einigen Bohrungen (6) versehen, die beim Verstopfen des Filters (7) bzw. oberen Steigrohrendes (3) dem Druckabbau dienen. Das Gehäuse (9) der Filtereinheit ist mit einer verschließbaren Öffnung

(10) versehen, durch die ein spitzer Stössel eingeführt werden kann, um eventuelle Salzpropfen aus dem oberen Steigrohrende zu entfernen. Die Bohrungen (6) haben beispielsweise Durchmesser von 2 bis 16 mm, je nach Steigrohrdurchmesser, und befinden sich unterhalb des Badspiegels.

## Patentansprüche

1. Vorrichtung zur kontinuierlichen Entschlammung von Salzbädern, bestehend aus einer Filtereinheit mit Gehäuse, einer Pumpe und einem Steigrohr, dadurch gekennzeichnet, daß die Filtereinheit mit dem Filter (7) ganz oder teilweise in das Salzbad (1) eintaucht, daß das Filter (7) über das obere Ende des Steigrohres (3) gestülpt ist, und daß das Steigrohr (3) im oberen, in das Salzbad (1) eintauchenden Bereich mehrere Bohrungen (6) aufweist, deren Durchmesser das 0,02- bis 0,2-fache des Steigrohrdurchmessers beträgt.

2. Vorrichtung nach Anspruch 1, dadurch gekennzeichnet, daß im Gehäuse (9) der Filtereinheit, in der Achse des Steigrohrs (3), eine verschließ-bare Öffnung (10) zur Durchführung eines Reinigungselements angebracht ist.

## Claims

1. An apparatus for the continuous removal of sludge from salt baths, consisting of a filter unit with housing, a pump and an ascending pipe, characterised in that the filter unit with filter (7) is partly or completely immersed in the salt bath (1), in that the filter (7) is placed over the upper end of the ascending pipe (3) and in that the ascending pipe (3) has a plurality of bores (6) in the upper region immersed in the salt bath (1), the diameter of which bores is from 0.02 to 0.2 times the diameter of the ascending pipe.

2. An apparatus according to Claim 1, characterised in that a closable opening (10) for passing a cleaning element through is provided in the housing (9) of the filter unit, in the axis of the ascending pipe (3).

## Revendications

1. Dispositif pour le décolmatage en continu de bains de sels, constitué d'une unité filtrante avec enveloppe, d'une pompe et d'un conduit ascendant, caractérisé en ce que l'unité filtrante avec le filtre (7) est plongée en partie ou en totalité dans le bain de sel (1), en ce que le filtre (7) est placé sur l'extrémité supérieure du conduit ascendant (3), et en ce que le conduit ascendant (3) présente, dans la partie immergée dans le bain de sel (1), plusieurs orifices dont le diamètre représente de 0,02 à 0,2 fois le diamètre du conduit ascendant.

2. Dispositif selon la revendication 1, caractérisé en ce qu'une ouverture pouvant être fermée (10) est ménagée dans l'enveloppe (9) de l'unité filtrante, dans l'axe du conduit ascendant (3), pour le passage d'un élément de nettoyage.

EP 0 310 809 B1

Abbildung

4